# FASCICULE DE BREVET EUROPEEN

(11) **EP 1 541 387 B1**
(45) Date de publication et mention de la délivrance du brevet: **30.08.2006**
(21) Numéro de dépôt: 04292796.2
(22) Date de dépôt: 26.11.2004
(51) Int. Cl.: B60G 15/06

(54) **Dispositif d'appui de suspension et véhicule comportant un tel dispositif**
Aufhängungsstützvorrichtung und Fahrzeug mit einer solchen Vorrichtung
Suspension support device and vehicle comprising such a device

(30) Priorité: 09.12.2003 FR 0314428
(43) Date de publication de la demande: 15.06.2005
(73) Titulaire: HUTCHINSON, 75008 Paris (FR)
(72) Inventeur: Colas, Patrice, 18100 Vierzon (FR); Bouhier, Bernard, 41140 Noyers sur Cher (FR); Carobolante, Pascal, 18100 Saint Hilaire de Court (FR)
(74) Mandataire: Burbaud, Eric

(56) Documents cités:
- EP-A- 0 268 393
- FR-A- 2 815 580
- US-A- 4 462 608
- US-A- 4 756 516
- US-A- 5 664 650
- US-B1- 6 293 572
- PATENT ABSTRACTS OF JAPAN vol. 2003, no. 06, 3 juin 2003 (2003-06-03) & JP 2003 035333 A (BRIDGESTONE CORP), 7 février 2003 (2003-02-07)
- PATENT ABSTRACTS OF JAPAN vol. 2003, no. 06, 3 juin 2003 (2003-06-03) & JP 2003 035334 A (BRIDGESTONE CORP), 7 février 2003 (2003-02-07)
- "FLEXIBLE RETAINING RING FOR SUSPENSION MODULES" RESEARCH DISCLOSURE, KENNETH MASON PUBLICATIONS, HAMPSHIRE, GB, no. 441, janvier 2001 (2001-01), page 40, XP001127951 ISSN: 0374-4353

## Description

L'invention est relative aux dispositifs d'appui de suspension et aux véhicules comportant de tels dispositifs.

Plus particulièrement, la présente invention concerne un dispositif d'appui de suspension destiné à être intégré entre d'une part un ensemble comprenant un ressort de suspension et un amortisseur et d'autre part la caisse d'un véhicule automobile, ce dispositif comportant :
- une armature intérieure comportant une base d'appui et une paroi latérale annulaire entourant la base d'appui, cette armature étant adaptée pour être fixée à une partie supérieure de l'amortisseur ;
- une armature extérieure propre à être fixée à la caisse du véhicule, ayant au moins une paroi latérale qui entoure au moins partiellement la paroi latérale de l'armature intérieure, cette armature extérieure étant adaptée pour servir d'appui pour le ressort de suspension et comprenant une portion inférieure disposée sous la base d'appui de l'armature intérieure, s'étendant sensiblement parallèlement à ladite base d'appui et présentant un passage central destiné à être traversé par ladite partie supérieure de l'amortisseur ;
- un corps en élastomère comportant une partie porteuse, ladite partie porteuse reliant entre elles l'armature intérieure et l'armature extérieure.

Un dispositif du genre en question est par exemple décrit dans le document US-B1-6 293 572.

Un tel dispositif donne de bons résultats. Il est toutefois apparu souhaitable de le perfectionner encore pour le rendre plus souple.

A cet effet, suivant un premier aspect, la présente invention propose un dispositif du genre en question caractérisé en ce que la paroi latérale de l'armature extérieure comporte au moins une fenêtre disposée à un niveau intermédiaire entre la base d'appui de l'armature intérieure et la portion inférieure de l'armature extérieure, le dispositif comportant une cavité sous la partie porteuse du corps en élastomère.

Un tel dispositif permet d'augmenter la souplesse du dispositif et d'empêcher efficacement une détente excessive de l'ensemble comprenant l'amortisseur et le ressort de suspension, par exemple après une compression de grande amplitude (rebond), tout en permettant une grande compacité dans la direction verticale.

L'ensemble du dispositif selon l'invention peut ainsi, le cas échéant, être totalement intégré sous la caisse du véhicule, sans dépasser de la caisse vers le haut.

Un dispositif selon l'invention est donc compatible avec les mesures de sécurité qui tendent à imposer de plus en plus de contraintes sur l'encombrement en hauteur du capot des véhicules, pour limiter les conséquences d'un choc avec un piéton notamment.

Dans des modes de réalisation du dispositif d'appui de suspension selon l'invention, on peut éventuellement avoir recours à l'une et/ou à l'autre des dispositions suivantes :
- le dispositif comporte au moins une première butée souple en élastomère fixée à la base d'appui de l'armature inférieure ou à la portion inférieure de l'armature extérieure ; cette disposition permet de cumuler un effet d'amortissement avec l'effet de limitation de débattement ;
- une première butée souple est fixée sous la base d'appui de l'armature inférieure ;
- au moins une première butée souple en élastomère fixée sous la base d'appui de l'armature inférieure ou sur la portion inférieure de l'armature extérieure fait partie du corps en élastomère : un seul moulage permet de réaliser le corps en élastomère et cette butée, ce qui simplifie le montage du dispositif et qui diminue son coût ;
- la paroi latérale de l'armature extérieure définit un espace intérieur dans lequel l'armature intérieure est entièrement contenue, ce qui permet de diminuer encore l'encombrement du dispositif selon l'invention ;
- la paroi latérale de l'armature extérieure comporte une partie supérieure prolongée par un rebord s'étendant vers l'extérieur, ledit rebord étant adapté pour être fixé sous la caisse ;
- la paroi latérale de l'armature intérieure comporte une partie supérieure garnie d'au moins une seconde butée en élastomère orientée vers le haut, destinée à venir buter sur la caisse ; cette disposition permet de limiter l'écrasement de l'ensemble comprenant l'amortisseur et le ressort de suspension en cas de compression importante notamment ;
- une seconde butée en élastomère de la partie supérieure de l'armature intérieure fait partie du corps en élastomère ; la butée en élastomère est ainsi moulée en même temps que le corps en élastomère, ce qui simplifie le montage du dispositif et en diminue le coût ;
- le corps en élastomère recouvre l'ensemble des armatures intérieure et extérieure et constitue une partie au moins du garnissage d'appui pour le ressort de suspension ;
- la portion inférieure de l'armature extérieure décrit un ressaut en direction et en regard de la base d'appui de l'armature intérieure.

Suivant un second aspect, l'invention est relative à un véhicule automobile comportant une caisse, au moins un amortisseur, au moins un ressort de suspension et au moins un dispositif d'appui, tel que décrit ci-dessus, avec l'armature intérieure étant fixée à une partie supérieure de l'amortisseur tandis que l'armature extérieure est fixée à la caisse du véhicule, le ressort de suspension étant en appui sous ladite armature extérieure.

Dans un mode de réalisation du véhicule automobile selon l'invention, la paroi latérale de l'armature extérieure comporte une partie supérieure prolongée par un rebord s'étendant vers l'extérieur qui est fixé sous la caisse du véhicule et la paroi latérale de l'armature intérieure comporte une partie supérieure garnie d'une deuxième butée en élastomère orientée vers le haut, adaptée pour venir buter sous la caisse du véhicule

D'autres caractéristiques et avantages de l'invention apparaîtront encore à la lecture de la description qui va suivre. Celle-ci est purement illustrative et doit être lue en regard des dessins annexés sur lesquels :

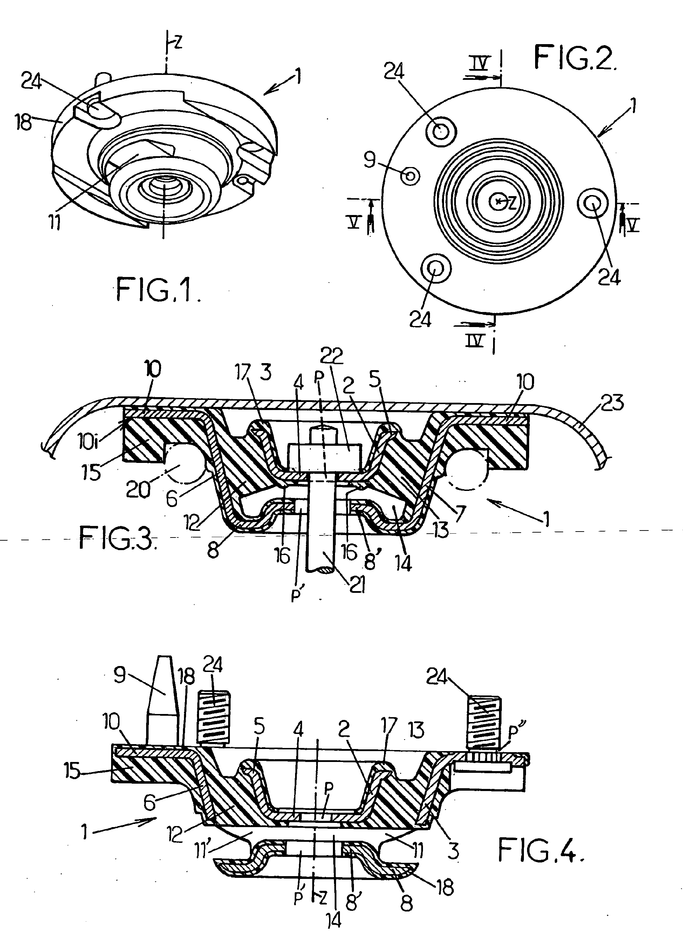

- la figure 1 représente une vue en perspective inférieure d'un dispositif selon un mode de réalisation de l'invention ;
- la figure 2 représente une vue de dessus du dispositif représenté en figure 1 ;
- la figure 3 est une vue en coupe suivant la ligne III-III du dispositif représenté en figure 2 ;
- et la figure 4 est une vue en coupe suivant la ligne IV-IV du dispositif représenté en figure 2.

Sur les différentes figures, les mêmes références désignent des éléments identiques ou similaires.

Le dispositif d'appui de suspension 1 représenté sur les dessins comporte une armature intérieure 2 en forme de coupelle qui présente une paroi latérale annulaire 3 centrée autour d'un axe vertical Z. Cette paroi latérale 3 se prolonge radialement vers l'intérieur, à son extrémité inférieure, par une base d'appui 4 s'étendant dans un plan perpendiculaire à l'axe Z et pourvue d'un passage P centré sur l'axe Z, destiné à permettre le passage d'une partie supérieure d'un amortisseur 21 (notamment la tige de l'amortisseur) auquel le dispositif 1 est fixé. La partie supérieure de la paroi latérale 3 de l'armature intérieure 2 est prolongée par un rebord 5 s'étendant vers l'extérieur dans un plan perpendiculaire à l'axe Z.

Le dispositif d'appui de suspension 1 comporte en outre une armature extérieure 6 sensiblement en forme de coupelle également. L'armature extérieure 6 comporte une paroi annulaire latérale 7 centrée sur l'axe Z et entourant la paroi latérale 3 de l'armature intérieure 2. La paroi annulaire latérale 7 délimite un espace intérieur E contenant entièrement l'armature intérieure 2, dans l'exemple représenté.

L'armature extérieure 6 comprend en outre une portion inférieure 8 qui est disposée sous la base d'appui 4 de l'armature intérieure 2 et qui prolonge l'extrémité inférieure de la paroi latérale 7, radialement vers l'intérieur. Cette portion inférieure présente un ressaut annulaire 8' en regard de la base d'appui 4 et en direction de cette base d'appui 4. La portion inférieure 8 comprend en outre un passage P' centré sur l'axe Z, destiné à permettre le passage et la fixation de la partie supérieure 21 de l'amortisseur.

La partie supérieure de la paroi latérale 7 de l'armature extérieure 6 est prolongée par un rebord 10 s'étendant vers l'extérieur dans un plan perpendiculaire à l'axe Z et fixé sous la caisse 23 du véhicule.

Le rebord 10 comporte par exemple des passages P" destinés à permettre le passage de vis de fixation 24 vissées à la caisse du véhicule. Le rebord 10 peut comporter en outre un pion de centrage 9 s'élevant vers le haut parallèlement à l'axe Z.

La paroi latérale 7 de l'armature extérieure 6 comporte deux fenêtres opposées 11 et 11', disposées à un niveau situé entre la base d'appui 4 de l'armature intérieure 2 et la portion inférieure 8 de l'armature extérieure 6.

Le dispositif selon l'invention 1 considéré ici comporte en outre un corps en élastomère 12. Ce corps en élastomère 12 comprend une partie porteuse 13 reliant entre les surfaces respectivement extérieure et intérieure des parois latérales 3 et 7 des armatures intérieures 2 et 6.

Le dispositif 1 comporte en outre une cavité 14 sous la partie porteuse 13 du corps en élastomère 12, dans un espace situé entre la base d'appui 4 de l'armature intérieure 2 et la portion inférieure 8 de l'armature extérieure, en regard des fenêtres 11, 11'.

Par ailleurs le corps en élastomère 12 comporte une partie 15 de garnissage d'appui située sur la face inférieure 10i du rebord 10 de l'armature extérieure 6.

Le corps en élastomère 12 forme des butées souples 16, dites butées de rebond, sous la base d'appui de l'armature intérieure 2, et orientées vers le bas, en regard de la portion inférieure 8 de l'armature extérieure 6.

Le corps en élastomère 12 comporte en outre des butées souples 17, dites butées de choc 17, sur le rebord 5 de l'armature intérieure 2 et orientées vers le haut.

Les surfaces des armatures intérieure 2 et extérieures 6 non couvertes par les parties citées ci-dessus du corps en élastomère 12, peuvent être recouvertes d'une mince couche 18 de ce corps en élastomère 12.

Le ressort de suspension 20 vient en appui sur le garnissage d'appui 15 disposé sous le rebord 10 de l'armature extérieure 6.

Une tige supérieure filetée 21 de l'amortisseur vient traverser les passages P et P' décrits respectivement dans la base d'appui 4 et la portion inférieure 8 des armatures intérieure 2 et extérieure 6. L'assujettissement de la partie supérieure de l'amortisseur 21 au dispositif 1 est assuré par exemple par un boulon 22 qui est vissé sur ladite partie supérieure de l'amortisseur 21 et qui vient en appui sur la base d'appui 4 de l'armature intérieure 2.

Le dispositif d'appui de suspension 1 dans le mode de réalisation considéré dans la présente description permet donc de réaliser les fonctions de liaison et d'amortissement entre la caisse du véhicule 23 et l'amortisseur 21, notamment grâce à la partie porteuse 13 du corps en élastomère 12 reliant les deux armatures 2 et 6. Le dispositif selon l'invention décrit assure également ces fonctions de liaison et d'amortissement entre la caisse du véhicule 23 et le ressort 20, notamment grâce au garnissage d'appui 15 disposé entre le ressort 20 et l'armature extérieure 6 fixée à la caisse 23.

Les débattements de l'amortisseur par rapport à la caisse sont limités en compression et en extension par le dispositif 1. En cas de compression, les butées de choc 17 surmontant le rebord 5 de l'armature intérieure 2 viennent s'écraser sous la caisse, limitant ainsi le débattement. En cas d'extension, la base d'appui 4 de l'armature inférieure 2 vient, à travers la cavité 14 ménagée dans le dispositif 1 entre la base d'appui 4 de l'armature intérieure 2 et la portion inférieure 8 de l'armature extérieure, en appui sur la portion inférieure 8 de l'armature extérieure 6, les butées de rebond 16 assurant un arrêt souple (on notera que pour assurer la même fonction, les butées de rebond 16 peuvent dans un mode de réalisation différent, être disposées sur le dessus de la portion inférieure 8 de l'armature extérieure 6).

La présence de la cavité 14 sous la partie porteuse du corps en élastomère permet de procurer une plus grande souplesse au dispositif d'appui de suspension 1 selon l'invention.

Comme on le voit, l'intégration des différentes fonctions d'amortissement, de liaison et de limitation des débattements du dispositif, en particulier l'intégration de la butée de rebond à l'intérieur du logement décrit par la paroi latérale 7 de l'armature extérieure 6, permet d'obtenir un dispositif très compact, pouvant être complètement glissé sous la caisse 23.

Par ailleurs, il offre l'avantage de pouvoir être réalisé à l'aide de deux armatures différentes seulement, et d'un seul moulage d'élastomère. Le montage d'un tel dispositif selon l'invention est ainsi simple, et d'un coût réduit.

## Revendications

1. Dispositif d'appui de suspension (1) destiné à être intégré entre d'une part un ensemble comprenant un ressort de suspension (20) et un amortisseur (21) et d' autre part, la caisse (23) d'un véhicule automobile, ce dispositif comportant :
- une armature intérieure (2) comportant une base d'appui (4) et une paroi latérale annulaire (3) entourant la base d'appui (4), cette armature étant adaptée pour être fixée à une partie supérieure de l'amortisseur (21) ;
- une armature extérieure (6) propre à être fixée à la caisse (23) du véhicule, ayant au moins une paroi latérale (7) qui entoure au moins partiellement la paroi latérale de l'armature intérieure, cette armature extérieure étant adaptée pour servir d'appui pour le ressort de suspension et comprenant une portion inférieure (8) disposée sous la base d'appui (4) de l'armature intérieure, s'étendant sensiblement parallèlement à ladite base d' appui et présentant un passage central (P') destiné à être traversé par ladite partie supérieure de l'amortisseur;
- un corps en élastomère (12) comportant une partie porteuse (13), ladite partie porteuse reliant entre elles l'armature intérieure et l'armature extérieure ;
**caractérisé en ce que** la paroi latérale (7) de l'armature extérieure (6) comporte au moins une fenêtre (11,11') disposée à un niveau intermédiaire entre la base d'appui (4) de l'armature intérieure (2) et la portion inférieure (8) de l'armature extérieure (6), le dispositif comportant une cavité (14) sous la partie porteuse (13) du corps en élastomère (12).

2. Dispositif d'appui selon la revendication 1, comportant au moins une première butée (16) souple en élastomère fixée à un premier élément choisi parmi la base d'appui (4) de l'armature inférieure (2) et la portion inférieure (8) de l'armature extérieure (6), ladite première butée souple étant disposée en regard d'un deuxième élément choisi parmi ladite base d'appui (4) et ladite portion inférieure (8).

3. Dispositif d'appui selon la revendication 2, dans lequel ladite première butée (16) est fixée sous la base d'appui (4) de l'armature inférieure (2)

4. Dispositif d'appui selon la revendication 3, dans lequel ladite butée (16) est formée d'une seule pièce avec le corps en élastomère (12).

5. Dispositif d'appui selon l'une quelconque des revendications précédentes, dans lequel la paroi latérale (7) de l'armature extérieure (6) définit un espace intérieur dans lequel l'armature intérieure (2) est entièrement contenue.

6. Dispositif d'appui selon l'une quelconque des revendications précédentes, dans lequel la paroi latérale (7) de l'armature extérieure (6) comporte une partie supérieure prolongée par un rebord (10) s'étendant vers l'extérieur, ledit rebord étant adapté pour être fixé sous la caisse (23) du véhicule.

7. Dispositif d'appui selon l'une quelconque des revendications précédentes, dans lequel la paroi latérale (3) de l'armature intérieure (2) comporte une partie supérieure (5) garnie d'au moins une deuxième butée (17) en élastomère orientée vers le haut, destinée à venir buter sous la caisse (23).

8. Dispositif d'appui selon la revendication 7, dans lequel ladite deuxième butée (17) est formée d'une seule pièce avec le corps en élastomère (12).

9. Dispositif d'appui selon l'une quelconque des revendications précédentes, dans lequel le corps en élastomère (12) recouvre les armatures intérieure (2) et extérieure (6) et forme un garnissage d'appui (15) orienté vers le bas pour le ressort de suspension (20).

10. Dispositif d'appui selon l'une quelconque des revendications précédentes, dans lequel la portion inférieure (8) de l'armature extérieure (6) décrit un ressaut (8') en direction et en regard de la base d'appui (4) de l'armature intérieure (2).

11. Véhicule automobile comportant une caisse (23), au moins un amortisseur (21), au moins un ressort de suspension (20) et au moins un dispositif d'appui (1) selon l'une des revendications précédentes, l'armature intérieure (2) étant fixée à une partie supérieure de l'amortisseur (21) tandis que l'armature extérieure (6) est fixée à la caisse (23) du véhicule, le ressort de suspension (20) étant en appui sous ladite armature extérieure.

12. Véhicule automobile selon la revendication 11, dans lequel
- la paroi latérale (7) de l'armature extérieure (6) comporte une partie supérieure prolongée par un rebord (10) s'étendant vers l'extérieur qui est fixé sous la caisse (23) du véhicule,
- et la paroi latérale (3) de l'armature intérieure (2) comporte une partie supérieure (5) garnie d'une deuxième butée (17) en élastomère orientée vers le haut, adaptée pour venir buter sous la caisse (23) du véhicule.

## Claims

1. A suspension support device (1) for integrating between firstly an assembly comprising a suspension spring (20) and a shock absorber (21), and secondly the body (23) of a motor vehicle, the device comprising:
· an inner strength member (2) comprising a support base (4) and an annular side wall (3) surrounding the support base (4), said strength member being adapted to be fixed to a top portion of the shock absorber (21);
· an outer strength member (6) suitable for being fixed to the vehicle body (23), having at least one side wall (7) surrounding at least in part, the side wall of the inner strength member, said outer strength member being adapted to serve as a support for the suspension spring and including a bottom portion (8) disposed beneath the support base (4) of the inner strength member, extending substantially parallel to said support base, and presenting a central passage (P') for passing said top portion of the shock absorber; and
· an elastomer body (12) including a load-carrying portion (13), said load-carrying portion interconnecting the inner and outer strength members;
the device being **characterized in that** the side wall (7) of the outer strength member (6) includes at least one window (11, 11') disposed at an intermediate level between the support base (4) of the inner strength member (2) and the bottom portion (8) of the outer strength member (6), the device including a cavity (14) under the load-carrying portion (13) of the elastomer body (12).

2. A support device according to claim 1, including at least a first elastomer abutment (16) that is flexible and fixed to a first element selected from the support base (4) of the inner strength member (2) and the bottom portion (8) of the outer strength member (6), said flexible first abutment being disposed facing a second element selected between said support base (4) and said bottom portion (8).

3. A support device according to claim 2, in which said first abutment (16) is fixed under the support base (4) of the inner strength member (2).

4. A support device according to claim 3, in which said abutment (16) is formed integrally with the elastomer body (12).

5. A support device according to any preceding claim, in which the side wall (7) of the outer strength member (6) defines an inside space in which the inner strength member (2) is contained in full.

6. A support device according to any preceding claim, in which the side wall (7) of the outer strength member (6) includes a top portion extended by a rim (10) that extends outwards, said rim being adapted to be fixed under the vehicle body (23).

7. A support device according to any preceding claim, in which the side wall (3) of the inner strength member (2) includes a top portion (5) lined with at least one second elastomer abutment facing upwards for the purpose of coming into abutment under the vehicle body (23).

8. A support device according to claim 7, in which said second abutment (17) is formed integrally with the elastomer body (12).

9. A support device according to any preceding claim, in which the elastomer body (12) covers the inner and outer strength members (2 and 6) and forms a downwardly-facing support liner (15) for the suspension spring (20).

10. A support device according to any preceding claim, in which the bottom portion (8) of the outer strength member (6) defines an extension (8') extending towards and facing the support base (4) of the inner strength member (2).

11. A motor vehicle including a body (23), at least one shock absorber (21), at least one suspension spring (20), and at least one support device (1) according to any preceding claim, the inner strength member (2) being fixed to a top portion of the shock absorber (21) while the outer strength member (6) is fixed to the vehicle body (23), the suspension spring (20) bearing against the underside of said outer strength member.

12. A motor vehicle according to claim 11, in which:
· the side wall (7) of the outer strength member (6) has a top portion extended by a rim (10) extending outwards and fixed under the vehicle body (23); and
· the side wall (3) of the inner strength member (2) has a top portion (5) lined with an upwardly-facing second elastomer abutment (17) adapted to come into abutment against the underside of the vehicle body (23).

## Patentansprüche

1. Aufhängungsstützvorrichtung (1), die dafür vorgesehen ist, zwischen eine Baugruppe, die eine Aufhängungsfeder (20) und einen Dämpfer (21) umfasst, einerseits und die Karosserie (23) eines Kraftfahrzeuges andererseits integriert zu werden, wobei diese Vorrichtung umfasst:
- einen inneren Beschlag (2), der eine Stützbasis (4) und eine die Stützbasis (4) umgebende ringförmige Seitenwand (3) umfasst, wobei dieser Beschlag angepasst ist, um an einem oberen Abschnitt des Dämpfers (21) befestigt zu werden;
- einen speziellen äußeren Beschlag (6), der an der Karosserie (23) des Fahrzeuges zu befestigen ist, mit wenigstens einer Seitenwand (7), welche die Seitenwand des inneren Beschlags wenigstens teilweise umgibt, wobei dieser äußere Beschlag angepasst ist, um als Abstützung für die Aufhängungsfeder zu dienen, und der einen unteren Abschnitt (8) umfasst, der unter der Stützbasis (4) des inneren Beschlags angeordnet ist und sich im Wesentlichen parallel zu der Stützbasis erstreckt und einen zentralen Durchgang (P') aufweist, der dafür vorgesehen ist, von dem oberen Abschnitt des Dämpfers durchdrungen zu werden;
- einen Elastomerkörper (12), der einen Träger-Abschnitt (13) umfasst, wobei der Träger-Abschnitt den inneren Beschlag und den äußeren Beschlag miteinander verbindet;
**dadurch gekennzeichnet, dass** die Seitenwand (7) des äußeren Beschlags (6) wenigstens ein Langloch (11, 11')umfasst, das in einem Zwischenbereich zwischen der Stützbasis (4) des inneren Beschlags (2) und dem unteren Abschnitt (8) des äußeren Beschlags (6) angeordnet ist, wobei die Vorrichtung einen Hohlraum (14) unter dem Träger-Abschnitt (13) des Elastomerkörpers (12) umfasst.

2. Stützvorrichtung nach Anspruch 1, umfassend wenigstens einen ersten biegsamen Anschlag (16) aus Elastomer, der an einem ersten Element, das aus der Stützbasis (4) des inneren Beschlags (2) und dem unteren Abschnitt (8) des äußeren Beschlags ausgewählt wird, befestigt ist, wobei der erste biegsame Anschlag gegenüber einem zweiten Element, das aus der Stützbasis (4) und dem unteren Abschnitt (8) ausgewählt wird, angeordnet ist.

3. Stützvorrichtung nach Anspruch 2, bei welcher der erste Anschlag (16) unter der Stützbasis (4) des unteren Beschlags (2) befestigt ist.

4. Stützvorrichtung nach Anspruch 3, bei welcher der Anschlag (16) aus einem einzigen Stück mit dem Elastomerkörper (12) gebildet ist.

5. Stützvorrichtung nach einem der vorhergehenden Ansprüche, bei welcher die Seitenwand (7) des äußeren Beschlags (6) einen inneren Raum festlegt, in dem der innere Beschlag (2) vollständig enthalten ist.

6. Stützvorrichtung nach einem der vorhergehenden Ansprüche, bei welcher die Seitenwand (7) des äußeren Beschlags (6) einen oberen Abschnitt umfasst, der von einem Rand (10) verlängert wird, welcher sich nach außen hin erstreckt, wobei der Rand angepasst ist, um unter der Karosserie (23) der Fahrzeugs befestigt zu werden.

7. Stützvorrichtung nach einem der vorhergehenden Ansprüche, bei welcher die Seitenwand (3) des inneren Beschlags (2) einen oberen Abschnitt (5) umfasst, der mit wenigstens einem nach oben ausgerichteten zweiten Anschlag (17) aus Elastomer versehen ist, der dafür vorgesehen ist, sich unten an der Karosserie (23) abzustützen.

8. Stützvorrichtung nach Anspruch 7, bei welcher der zweite Anschlag (17) aus einem einzigen Stück mit dem Elastomerkörper (12) gebildet ist.

9. Stützvorrichtung nach einem der vorhergehenden Ansprüche, bei welcher der Elastomerkörper (12) den inneren (2) und äußeren (6) Beschlag bedeckt und eine Stützauskleidung (15) bildet, die für die Aufhängungsfeder (20) nach unten hin ausgerichtet ist.

10. Stützvorrichtung nach einem der vorhergehenden Ansprüche, bei welcher der untere Abschnitt (8) des äußeren Beschlags (6) einen Vorsprung (8') in Richtung und gegenüber der Stützbasis (4) des inneren Beschlags (2) beschreibt.

11. Kraftfahrzeug umfassend eine Karosserie (23), wenigstens einen Dämpfer(21), wenigstens eine Aufhängungsfeder (20) und wenigstens eine Stützvorrichtung (1) gemäß einem der vorhergehenden Ansprüche, wobei der innere Beschlag (2) an einem oberen Abschnitt des Dämpfers (21) befestigt ist, wohingegen der äußere Beschlag (6) an der Karosserie (23) des Fahrzeugs befestigt ist, wobei die Aufhängungsfeder (20) sich unter dem äußeren Beschlag abstützt.

12. Kraftfahrzeug nach Anspruch 11, bei dem
- die Seitenwand (7) des äußeren Beschlags (6) einen oberen Abschnitt umfasst, der von einem sich nach außen hin erstreckenden Rand (10) verlängert ist, der unter der Karosserie (23) des Fahrzeugs befestigt ist,
- und die Seitenwand (3) des inneren Beschlags (2) einen oberen Abschnitt (5) umfasst, der mit einem nach oben ausgerichteten zweiten Anschlag (17) aus Elastomer versehen ist, der angepasst ist, sich unten an der Karosserie (23) des Fahrzeuges abzustützen.
